# EUROPÄISCHE PATENTSCHRIFT

(11) **EP 3 994 041 B1**
(45) Veröffentlichungstag und Bekanntmachung des Hinweises auf die Patenterteilung: **07.06.2023**
(21) Anmeldenummer: 20716771.9
(22) Anmeldetag: 02.04.2020
(51) Int. Cl.: B60W 30/085

(54) **VERFAHREN ZUM BETRIEB EINES KRAFTFAHRZEUGS IN EINER KOLLISIONSSITUATION UND KRAFTFAHRZEUG**
METHOD FOR OPERATING A MOTOR VEHICLE IN A COLLISION SITUATION AND MOTOR VEHICLE
PROCÉDÉ POUR FAIRE FONCTIONNER UN VÉHICULE À MOTEUR DANS UNE SITUATION DE COLLISION ET VÉHICULE À MOTEUR

(30) Priorität: 03.07.2019 DE 102019209728
(43) Veröffentlichungstag der Anmeldung: 11.05.2022
(73) Patentinhaber: Audi AG, 85045 Ingolstadt (DE)
(72) Erfinder: LANG, Markus, 85132 Sappenfeld (DE)
(86) Internationale Anmeldenummer: PCT/EP2020/059329
(87) Internationale Veröffentlichungsnummer: WO 2021/001071

(56) Entgegenhaltungen:
- DE-A1-102011 115 875
- DE-A1-102013 020 474
- DE-A1-102016 005 113
- DE-A1-102018 006 192
- JP-A- 2008 024 108
- ADAMEC J ET AL: "Technical and biomechanical aspects of legal assessment of whiplash-associated disorders", RECHTSMEDIZIN, SPRINGER BERLIN HEIDELBERG, BERLIN/HEIDELBERG, Bd. 27, Nr. 5, 10. April 2017 (2017-04-10) , Seiten 455-471, XP036331427, ISSN: 0937-9819, DOI: 10.1007/S00194-017-0154-1 [gefunden am 2017-04-10]
- Burg Heinz ET AL: "Handbuch Verkehrsunfallrekonstruktion, Teil D1 - Fachbegriffe nach DIN 75204 Strassenfahrzeuge" In: "Handbuch Verkehrsunfallrekonstruktion", 16 June 2009 (2009-06-16), Springer Vieweg, XP055803977, ISBN: 978-3-8348-0546-1 pages 941-942, Retrieved from the Internet: URL:http://ebookcentral.proquest.com/lib/e po-ebooks/detail.action?docID=748053>
- Wech L.: "Verkehrsunfallanalyse und passive Fahrzeugsicherheit - Übungsaufgaben WS 2006/07", , 25 January 2007 (2007-01-25), pages 1-1, XP055803403, Forum Fachschaft Maschinenbau, Unfallanalyse und passive Sicherheit Retrieved from the Internet: URL:https://forum.fsmb.de/forum/index.php? thread/5731-unfallanalyse-und-passive-sich erheit/

## Beschreibung

Die Erfindung betrifft ein Verfahren zum Betrieb eines Kraftfahrzeugs bei einer unvermeidbaren Kollision mit einem Kollisionsobjekt, insbesondere einem weiteren Fahrzeug, wobei mittels einer wenigstens einen Umfeldsensor umfassenden Umfeldsensoreinrichtung das Kollisionsobjekt betreffende Umfelddaten ermittelt werden und zur Ermittlung wenigstens einer Fahreingriffsinformation zur Kollisionsfolgenminderung ausgewertet werden, wobei das Kraftfahrzeug gemäß der Fahreingriffsinformation automatisch geführt wird. Daneben betrifft die Erfindung ein Kraftfahrzeug.

Funktionen zur Kollisionsvermeidung und/oder Kollisionsfolgenminderung sind ein wichtiges Forschungsgebiet, was die Sicherheit moderner Kraftfahrzeuge angeht. Dabei wurden im Stand der Technik bereits Sicherheitssysteme bekannt, die beispielsweise in der Lage sind, einen unmittelbar bevorstehenden und/oder gerade stattfindenden Crash, mithin eine Kollision, mittels entsprechender Kollisionssensorik festzustellen, die beispielsweise Abstandssensoren und/oder Beschleunigungssensoren, welche die Beschleunigung von Elementen des Kraftfahrzeugaufbaus vermessen, umfassen kann. Wird eine unmittelbar bevorstehende und/oder stattfindende Kollision festgestellt, was beispielsweise aufgrund eines Kollisionsparameters wie einer Zeit bis zur Kollision (Kollisionszeit, TTC) und/oder einer Kollisionswahrscheinlichkeit festgestellt werden kann, können Maßnahmen ausgelöst werden, die die Sicherheit innerhalb des Kraftfahrzeugs erhöhen sollen. Beispielsweise ist es denkbar, Insassenrückhaltesysteme, insbesondere Airbags und/oder Gurstraffer entsprechend anzusteuern, und/oder das Kraftfahrzeug in einen kollisionsgeeigneteren Zustand zu bringen, beispielsweise durch das Schließen von Fenstern und/oder Schiebedächern.

Sicherheitssysteme umfassen jedoch auch solche, die bereits deutlich vor einer Kollision das Risiko derselben oder gar deren Unvermeidbarkeit feststellen können, wofür üblicherweise Umfelddaten einer Umfeldsensoreinrichtung, beispielsweise umfassend Radarsensoren und/oder optische Sensoren, ausgewertet werden können. Dann können Maßnahmen auch optische und/oder akustische Warnungen des Fahrers umfassen, wobei bei unvermeidbaren Kollisionen auch bereits vorgeschlagen wurde, das Gehör durch eine Geräuschkulisse auf höhere Geräuschpegel während der Kollision vorzubereiten.

Die Sicherheit hinsichtlich gegebenenfalls eintretender Kollisionen in Kraftfahrzeugen wird ferner auch durch eine entsprechende Auslegung des Kraftfahrzeugaufbaus, beispielsweise durch das Schaffen von sogenannten "Knautschzonen", erhöht. Hierzu werden beispielsweise bestimmte Elemente wie Längsträger, Querträger und dergleichen innerhalb des Kraftfahrzeugs verbaut, die einen Teil der Kollisionsenergie in Deformationsenergie umwandeln sollen und somit von Insassen des Kraftfahrzeugs und/oder relevanten Fahrzeugsystemen fernhalten sollen.

DE 10 2016 005 113 A1 zeigt ein Verfahren zur Verringerung einer Kollisionsschwere zumindest zweier miteinander kollidierender Fahrzeuge, wobei das jeweilige Fahrzeug zumindest eine Deformationszone aufweist. Bei einer bevorstehenden Kollision wird eine in Bezug auf die Deformationszonen optimale Kollisionsposition der Fahrzeuge ermittelt und automatisch in eine Lenk-, Brems- und/oder Antriebsstrangfunktion zumindest eines Fahrzeuges eingegriffen, so dass die optimale Kollisionsposition zwischen den Fahrzeugen eingestellt wird.

DE 10 2017 202 537 A1 betrifft ein Verfahren zum Schutz einer Einrichtung für ein autonomes Fahrzeug bei einer Kollision des Fahrzeugs mit einem Unfallobjekt. Dort wird vorgeschlagen, aus Umfeldsignalen einer Umfeldsensoreinrichtung einen voraussichtlichen Kollisionspunkt zwischen dem Unfallobjekt und dem Fahrzeug zu bestimmen, in Abhängigkeit davon einen bevorzugten Kollisionspunkt auszuwählen und mittels eines Ausrichtungssignals die Ausrichtung des Fahrzeugs zu ändern, so dass eine Verschiebung des voraussichtlichen Kollisionspunktes zu dem bevorzugten Kollisionspunkt bewirkt wird. Zweck dieser Verschiebung ist, wichtige Einrichtungen, beispielsweise eine Umfeldsensoreinrichtung oder Kommunikationseinrichtung des Fahrzeugs, zu schützen, da bei deren Beschädigung eine Weiterfahrt des Fahrzeugs gegebenenfalls nicht mehr möglich wäre. Mithin wird der Kollisionspunkt, zu dem verschoben wird, ein solcher sein, an dem die Kollision voraussichtlich keinen oder einen möglichst geringen Schaden an der Einrichtung bewirkt.

DE 10 2017 115 988 A1 betrifft das Modifizieren einer Trajektorie abhängig von einer Objektklassifizierung. Dort soll bei einem Verfahren zum automatisierten Betreiben eines Fahrzeugs bei Erfassung eines Objekts in einem einer Trajektorie entsprechenden Bereich das Objekt klassifiziert werden, wobei die Bewegungsbahn der Trajektorie in Abhängigkeit von dem Klassifizieren des erfassten Objekts modifiziert wird, um beispielsweise beim automatisierten Einparken Objekten ausweichen zu können.

DE 103 29 567 A1 betrifft eine Vorrichtung und ein Verfahren zur Verringerung des Verletzungsrisikos von Fahrzeuginsassen bei einem Unfall. Eine mit einer Objekterkennungseinrichtung zusammenarbeitende Auswerteeinrichtung erkennt, ob eine Kollision des eigenen Fahrzeugs mit dem weiteren Fahrzeug unvermeidbar ist, wobei dann Fahrtrichtungsänderungseinrichtungen derart angesteuert werden, dass die unvermeidbare Kollision in einem Bereich eines weiteren Fahrzeugs erfolgt, so dass die Gefährdung der Insassen beider Fahrzeuge minimiert wird. Konkret soll der Aufprallbereich der seitliche Frontbereich oder der seitliche Heckbereich sein, um die Fahrgastzelle möglichst zu umgehen.

Problematisch ist, dass die vorgesehenen Fahrzeugaufbaustrukturen, beispielsweise Längsträger, Querträger und dergleichen, nur durch den Zufall der Crashposition genutzt werden. Beispielsweise führt eine Frontalkollision ohne Beteiligung des Längsträgers zu einem höheren Schadenseintrag in das Kraftfahrzeug als wenn dieser miteinbezogen würde. Dabei ist auch zu beachten, dass Fahrzeugführer instinktiv vom Gegenverkehr weglenken, auch wenn es sinnvoller wäre, eine größere Überschneidungsfläche für die Kollision zu nutzen.

Der Erfindung liegt daher die Aufgabe zugrunde, eine Möglichkeit zur Verbesserung des Kollisionsverhaltens bei unvermeidbaren Kollisionen mit einem Kraftfahrzeug anzugeben.

Diese Aufgabe wird gelöst durch ein Verfahren nach Anspruch 1 und ein Kraftfahrzeug nach Anspruch 8.

Zur Lösung dieser Aufgabe ist bei einem Verfahren der eingangs genannten Art erfindungsgemäß vorgesehen, dass die Auswertung der Umfelddaten gemeinsam mit einer den Fahrzeugaufbau, insbesondere umfassend Kollisionsenergie aufnehmende Elemente, des Kraftfahrzeugs beschreibenden Strukturinformation des eigenen Kraftfahrzeugs derart erfolgt, dass bei der Ermittlung der Fahreingriffsinformation ein die von der Fahrzeugstruktur aufgenommene Deformationsenergie maximierender, durch die Fahreingriffsinformation herzustellender, geänderter Kollisionspunkt ermittelt wird. Erfindungsgemäß wird also vorgeschlagen, im Fall einer unvermeidbaren Kollision die eigene Fahrzeugstruktur optimal auszunutzen, indem ausgehend von einer ursprünglich ermittelbaren Kollisionsposition, also einem ursprünglichen Kollisionspunkt, ein geänderter Kollisionspunkt ermittelt wird, beispielsweise als Erstkontaktpunkt, an dem durch den stattfindenden Aufprall die im Kraftfahrzeug vorhandenen, durch Deformation Energie aufnehmenden Strukturen verbessert ausgenutzt werden können, mithin mehr der Kollisionsenergie in Deformationsenergie umgesetzt wird, was zur Erhöhung der Sicherheit von Insassen des Kraftfahrzeugs beiträgt. Es wird eine Fahrereingriffsinformation ermittelt, über die der geänderte Kollisionspunkt erreicht wird, welcher entsprechend in einem zur wenigstens teilweise automatischen Führung des Kraftfahrzeugs geeigneten Fahrzeugsystem umgesetzt wird, so dass der Kollisionspunkt des Kraftfahrzeugs mit dem Kollisionsobjekt kein Zufallsprodukt der menschlichen Reaktion mehr ist, sondern gezielt herbeigeführt wird, um den in Deformationsenergie umsetzenden Anteil der Kollisionsenergie zu maximieren. Dabei wird der Kollisionspunkt anhand der energetischen Eigenschaften zumindest des Kraftfahrzeugs bestimmt, welche besonders vorteilhaft durch die Strukturinformation beschrieben werden.

Der Aufbau eines modernen Fahrzeugs enthält eine Vielzahl von Elementen, die nicht nur beispielsweise zur Stabilisierung der Fahrgastzelle und somit zum Schutz der Insassen darin beitragen sollen, sondern eben auch gezielt vorgesehen werden, um möglichst große Anteile der Kollisionsenergie, falls sie entsprechend belastet werden, in Deformationsenergie umzusetzen. Mit anderen Worten kann auch gesagt werden, dass der Fahrzeugaufbau Elemente enthält, die Kollisionsenergie absorbieren bzw. aufnehmen und, insbesondere durch Deformierung, verbrauchen. Derartige Elemente können beispielsweise Längs- und Querträger innerhalb des Kraftfahrzeugs sein. Derartige Elemente können beispielsweise aus hochfestem Stahl bzw. festem Stahl realisiert werden. Bekannt ist es selbstverständlich auch, zu bestimmten Deformationen führende Sollbruchstellen bzw. Solldeformationsstellen zu verwenden und dergleichen, insbesondere um bestimmte, sogenannte "Knautschzonen" innerhalb des Kraftfahrzeugs zu realisieren. Die Strukturinformation, die den Fahrzeugaufbau zumindest bezüglich dieser Deformations- und Energieaufnahmeeigenschaften beschreibt, kann beispielsweise Kollisionsenergie aufnehmende Elemente und deren Wirkungszusammenhang definieren. Dabei können bevorzugt den Elementen Energiedaten zugeordnet sein, die das Kollisionsenergieaufnahmeverhalten bzw. Kollisionsenergieumsetzverhalten beschreiben. Insbesondere kann die Strukturinformation eine Grundlage für ein Modell sein, das genutzt werden kann, um die Kollision zu simulieren und/oder durchzurechnen, mithin festzustellen, welche Deformationen in der gegebenen Kollisionssituation bei entsprechenden Kollisionspunkten auftreten. Der Kollisionspunkt bezeichnet dabei insbesondere den Erstkontaktpunkt, also den Ort, an dem bei der Kollision die erste Berührung des Kraftfahrzeugs mit dem Kollisionsobjekt stattfindet.

Konkret sind im Rahmen der vorliegenden Erfindung, was die Auswertung angeht, mithin folgende Schritte vorgesehen:
- Auswertung der Umfelddaten zur Ermittlung wenigstens einer die Kollision beschreibenden Kollisionsinformation, insbesondere einer Kollisionszeit und/oder einer Kollisionsposition und/oder einer Kollisionsgeschwindigkeit, und/oder einer das Kollisionsobjekt beschreibenden Objektinformation, vorzugsweise umfassend eine die Kollisionseigenschaften des Kollisionsobjekts beschreibende Strukturinformation, wobei die genannte Kollisionsposition als ursprünglicher Kollisionspunkt aufgefasst werden kann,
- Auswertung der Kollisionsinformation und der Objektinformation sowie der Strukturinformation zur Ermittlung des geänderten Kollisionspunkts in einem die von dem eigenen Kraftfahrzeug aufgenommene Deformationsenergie maximierenden Optimierungsverfahren, insbesondere unter Einschränkung auf erreichbare Kollisionspunkte,
- Ermittlung der Fahreingriffsinformation zum Erreichen des Kollisionspunktes.

Dabei sind Varianten, um Kollisionsinformationen einer bevorstehenden Kollision zu ermitteln, im Stand der Technik bereits weitgehend bekannt. Typische Parameter, die eine Kollision beschreiben, sind beispielsweise die Kollisionszeit, insbesondere also die Zeit bis zu der Kollision (TTC), die Kollisionsgeschwindigkeit, der Kollisionswinkel und/oder die Kollisionsposition, also der ursprüngliche Kollisionspunkt (Erstkontakt). Dabei können als Umfeldsensoren der Umfeldsensoreinrichtung grundsätzlich im Stand der Technik für solche Zwecke bekannte Ausgestaltungen herangezogen werden, so dass beispielsweise vorgesehen sein kann, dass eine wenigstens einen Radarsensor und wenigstens einen optischen Sensor, insbesondere eine Kamera, aufweisende Umfeldsensoreinrichtung verwendet wird. Zweckmäßigerweise, worauf im Folgenden noch näher eingegangen werden wird, können Umfelddaten eines optischen Sensors auch genutzt werden, um die bereits erwähnten Kollisionseigenschaften des Kollisionsobjekts genauer bestimmen zu können. Radarsensoren sind besonders geeignet, um auch dynamische Eigenschaften des Kollisionsobjekts zu bestimmen, beispielsweise dessen Geschwindigkeit, Beschleunigung und dergleichen. Zudem dienen sie der Bestimmung des Abstands. Die Umfeldsensoreinrichtung, welche selbstverständlich auch weitere Umfeldsensoren wie LIDAR-Sensoren und/oder Ultraschallsensoren umfassen kann, ermöglicht es also zum einen, den Fahrkanal des Unfallgegners, also des Kollisionsobjekts, zu berechnen, wobei diese sich dynamisch verändernden Eigenschaften, insbesondere bei weiteren Fahrzeugen als Kollisionsobjekt, zweckmäßigerweise auch ständig nachverfolgt werden können, um sicherzustellen, dass der optimale Kontaktpunkt, also der geänderte Kollisionspunkt, erreicht wird. Die Umfeldsensoreinrichtung kann jedoch ferner auch genutzt werden, um weitere Informationen über das Kollisionsobjekt zu sammeln, die bei der energetischen Betrachtung, die zur Ermittlung der Fahreingriffsinformation letztlich vorgenommen wird, von großem Nutzen sein kann.

Insgesamt ist es durch die vorliegende Erfindung möglich, Strukturen des Fahrzeugaufbaus bestmöglich auszunutzen und so den Schadenseinfluss auf die Insassen wie auch das Kraftfahrzeug erheblich zu verringern.

Dabei sieht eine besonders vorteilhafte Weiterbildung der vorliegenden Erfindung vor, dass wenigstens eine wenigstens eine Eigenschaft des Kollisionsobjekts beschreibende Kommunikationsinformation über eine zur Kraftfahrzeug-zu-Kraftfahrzeug-Kommunikation ausgebildete Kommunikationseinrichtung, insbesondere gesendet von dem Kollisionsobjekt, empfangen und bei der Ermittlung des geänderten Kollisionspunktes berücksichtigt wird. Mit besonderem Vorteil kann im Rahmen des erfindungsgemäßen Verfahrens Kraftfahrzeug-zu-Kraftfahrzeug-Kommunikation (C2C-Kommunikation) eingesetzt werden, da insbesondere bezüglich von Kollisionseigenschaften teilweise von außen schwer erkennbare Informationen beispielsweise an einen potentiellen oder definitiven Kollisionspartner übersendet werden können.

Kommunikationsinformationen können ferner auch die Kollision an sich betreffen. Dabei ist es zum einen denkbar, dass die Kommunikationsinformation getriggert, beispielsweise bei Erkennen der unvermeidbaren Kollision, gesendet wird, während es aber auch möglich ist, beispielsweise was Strukturinformationen als Kommunikationsinformation angeht, diese beispielsweise regelmäßig zu broadcasten bzw. grundsätzlich zur Verfügung zu stellen. Dabei sei an dieser Stelle darauf hingewiesen, dass über eine solche, durch eine Kommunikationseinrichtung bereitgestellte Kommunikationsschnittstelle auch weitere zweckmäßige Kommunikation mit anderen Kraftfahrzeugen, insbesondere dem Kollisionsobjekt, stattfinden kann und zweckmäßig ist. Beispielsweise kann bei einer erkannten Unfallgefahr eine Information wenigstens an den potentiellen Kommunikationspartner, gegebenenfalls auch an andere Verkehrsteilnehmer, übermittelt werden. Im Rahmen der vorliegenden Erfindung ist es in einer zweckmäßigen Ausgestaltung sogar denkbar, dass das Kraftfahrzeug und/oder das Kollisionsobjekt, insbesondere also das weitere Fahrzeug, unter Nutzung jeweiliger Kommunikationseinrichtungen ihr Fahrverhalten so abstimmen, dass jeweilige geänderte Kollisionspunkte erreicht werden. Dies ist insbesondere dann zweckmäßig, wenn das weitere Fahrzeug ebenso einen geänderten Kollisionspunkt und entsprechende Fahreingriffsinformationen ermitteln kann. Dann können sich die Kraftfahrzeuge, gegebenenfalls in einem Aushandlungsverfahren, gegenseitig so abstimmen, dass die jeweiligen geänderten Kollisionspunkte auf ideale Art und Weise erreicht werden können. Eine derartige Abstimmung vor einer Kollision kann auch andere Aspekte zusätzlich oder alternativ betreffen, beispielsweise eine Anpassung des Verhaltens des jeweiligen Kollisionspartners hinsichtlich Verzögerungsspitzen, Drall und dergleichen. Was Kollisionswarnungen, die als Kommunikationsinformation empfangen werden können, angeht, können diese beispielsweise auch benutzt werden, um Fahrzeugsysteme, insbesondere Insassenrückhaltesysteme, zu präkonditionieren und dergleichen.

In einer Weiterbildung können Kommunikationsinformationen auch Insassen des Kollisionspartners beschreibende Zusatzdaten umfassen, beispielsweise den körperlichen Zustand von Insassen. So können beispielsweise Informationen zum Alter oder anderweitig für die Bestimmung, welche Dreh- und Längsbeschleunigungen/Impulse diese Insassen aushalten, geeignete Informationen sein.

In einer besonders vorteilhaften Ausgestaltung der vorliegenden Erfindung kann vorgesehen sein, dass aus den Umfelddaten und/oder der Kommunikationsinformation eine Strukturinformation des Kollisionsobjekts ermittelt wird und die Ermittlung des geänderten Kollisionspunktes unter Berücksichtigung der Strukturinformationen sowohl des eigenen Kraftfahrzeugs als auch des Kollisionspartners erfolgt. Mit anderen Worten können insbesondere der Strukturinformation für das eigene Kraftfahrzeug entsprechende Strukturinformationen des Kollisionsobjekts auf unterschiedliche Arten, insbesondere auch fusionierend, ermittelt werden, insbesondere aus den Umfelddaten und/oder der Kommunikationsinformation, so dass im Fall einer unvermeidbaren Kollision nicht nur die eigene Fahrzeugstruktur möglichst optimal ausgenutzt werden kann, sondern auch die Fahrzeugstruktur bzw. allgemein Objektstruktur des Kollisionspartners, im vorliegenden Fall also des Kollisionsobjekts. Beispielsweise im Fall eines weiteren Fahrzeugs als Kollisionsobjekt kann also ein optimaler Kollisionspunkt anhand der energetischen Eigenschaften beider Fahrzeuge bestimmt werden, um eine weitere Verbesserung zu erreichen.

Zur Herleitung zu Strukturinformationen aus Umfelddaten können beispielsweise durch optische Sensoren, insbesondere eine Kamera, Hinweise auf die Objektstruktur, konkret die Fahrzeugstruktur, gebende Merkmale detektiert und extrahiert werden. Beispielsweise bei einem weiteren Fahrzeug als Kollisionsobjekt ist es möglich, Türen, Klappen, Scheiben, einen Kühlergrill und dergleichen je nach Blickwinkel zu erkennen. Dies kann selbstverständlich mit Umfelddaten anderer Umfeldsensoren, beispielsweise eines Radarsensors, kombiniert werden, so dass auch Abstände, Orientierungen und dergleichen folgen. Im Fall der Herleitung aus einer Kommunikationsinformation kann diese die Strukturinformation, beispielsweise auch hier Elemente des Fahrzeugaufbaus mit zugeordneten Energiedaten, bereits unmittelbar umfassen oder zumindest die Grundlage bieten, die Strukturinformation des Kollisionsobjekts zu ermitteln.

Eine zweckmäßige Weiterbildung der vorliegenden Erfindung kann auch vorsehen, dass aus den Umfelddaten und/oder der Kommunikationsinformation ein Fahrzeugtyp des Kollisionsobjekts ermittelt wird, wobei die Strukturinformation unter Verwendung des Fahrzeugtyps aus einer Datenbank abgerufen wird. Der Fahrzeugtyp, also eine Fahrzeugtypinformation, kann dabei beispielsweise einen Hersteller und ein Modell umfassen, welche im einfachsten Fall als Teil der Kommunikationsinformation übersandt werden können, aber auch über bekannte Methoden der Umfelddatenverarbeitung, insbesondere der Bildverarbeitung, durch Auswertung der entsprechenden Umfelddaten ermittelt werden. Ist die Fahrzeugtypinformation erst bestimmt, kann sie genutzt werden, um aus einer im Kraftfahrzeug hinterlegten und/oder über eine Kommunikationsverbindung ansprechbaren Datenbank die passenden Strukturinformationen abzurufen. Eine solche Datenbank, auf die über eine Kommunikationsverbindung zugegriffen werden kann, kann beispielsweise im Internet und/oder über eine Mobilfunkverbindung erreichbar sein.

In diesem Zusammenhang kann vorgesehen sein, dass bei nicht feststellbarem Fahrzeugtyp eine Default-Strukturinformation verwendet wird. Damit ist eine Rückfalllösung für die Fälle gegeben, in denen sich bei einem weiteren Fahrzeug als Kollisionsobjekt kein Fahrzeugtyp feststellen lässt bzw. keine Strukturinformation zur Verfügung steht. In solchen Fällen kann mithin eine insbesondere einfach gehaltene Default-Strukturinformation herangezogen werden. Diese enthält beispielsweise übliche Fahrzeugstrukturen, anhand derer ebenso ein Kollisionspunkt festgelegt werden kann, der beispielsweise eine hohe Überdeckung beim Frontalcrash und/oder einen breitflächigen Kontakt auf den Elementen mit hoher Steifigkeit vorsieht. Strukturen bzw. Elemente des Fahrzeugaufbaus mit hoher Steifigkeit können beispielsweise A, B, C, D-Säule und dergleichen sein.

Allgemein kann im Rahmen der vorliegenden Erfindung gesagt werden, dass die Berechnungen zur Ermittlung des geänderten Kollisionspunkts, insbesondere der Deformierungsenergie, als analytische Berechnungen und/oder Simulationen, insbesondere unter Verwendung eines in der Strukturinformation enthaltenen und/oder aus dieser ermittelten Modells, erfolgen können.

Erfindungsgemäß ist vorgesehen, dass neben einer Maximierung der Deformationsenergie auch eine Minimierung der Eindringtiefe und/oder eine maximal zulässige Eindringtiefe bei der Ermittlung des geänderten Kollisionspunktes berücksichtigt wird. Beispielsweise kann im Fall mehrerer Optimierungsziele auch eine Gewichtung der verschiedenen Optimierungsziele vorgenommen werden. Mithin ist es ein Ziel hinsichtlich der Wahl des geänderte Kollisionspunkts, so viel Kollisionsenergie wie möglich abzubauen und dabei eine geringe Eindringtiefe in das Kraftfahrzeug zu gewährleisten bzw. anzustreben.

Wie bereits erwähnt, beschreibt die Strukturinformation des eigenen Kraftfahrzeugs (und idealerweise auch die Strukturinformation des Kollisionsobjekts) die jeweiligen insbesondere fahrzeugspezifischen Kollisionseigenschaften, bei Kraftfahrzeugen beispielsweise spezifische Eigenschaften der Karosserie, beispielsweise Steifigkeit, geometrische Konstruktion und dergleichen.

Dies erlaubt es, in einem Optimierungsverhfahren die Strukturinformation zu nutzen, um Rückschlüsse auf den optimalen Kontaktpunkt zur Krafteinleitung, mithin den optimalen Kollisionspunkt, zu ziehen.

Erfindungsgemäß ist vorgesehen, dass die Ermittlung der Deformationsenergie aus einem Verformungsweg in einem Energierasterverfahren erfolgt. Das Energierasterverfahren ist aus der Unfallanalytik im Stand der Technik bereits bekannt und bietet die Möglichkeit, die Summe der Deformationsenergie anhand der Verformungen zu ermitteln. Die Verformungen selbst lassen sich, wie bereits erläutert, aus den Strukturinformationen, die ja kollisionsrelevante Eigenschaften (Kollisionseigenschaften) des Kraftfahrzeugs und idealerweise auch des Kollisionsobjekts beschreiben, herleiten. Dabei kann in konkreten Ausgestaltungen beispielsweise zwischen der statischen und der dynamischen Verformung unterschieden werden, da die Fahrzeugkarosserie nach einer Kollision wieder ausfedert. Der dynamische Verformungsweg und der statische Verformungsweg sind beispielsweise, wie im Stand der Technik bekannt, über die Stoßzahl verknüpft, welche ebenso auf entsprechend bekannte Art hergeleitet werden kann. Mithin existieren im Stand der Technik eine Vielzahl von Methoden zur konkreten, wenigstens teilweise analytischen Berechnung und/oder Simulation von Deformationen und zur Herleitung entsprechender Deformationsenergien.

Eine äußerst vorteilhafte Weiterbildung der vorliegenden Erfindung sieht vor, dass bei der Ermittlung des geänderten Kollisionspunktes auch eine die Position von Insassen innerhalb des Kraftfahrzeugs beschreibende Insasseninformation, insbesondere ermittelt durch eine Belegungserkennungseinrichtung, verwendet wird. Zweckmäßigerweise können beispielsweise bekannte Sitzbelegungsmechanismen eingesetzt werden, um festzustellen, auf welche Art und Weise die Fahrgastzelle innerhalb des Kraftfahrzeugs belegt ist. Dabei können beispielsweise unterschiedliche Sitze innerhalb des Kraftfahrzeugs als belegt oder nicht belegt klassifiziert werden, wobei auch zusätzliche Attribute zugeordnet werden können, beispielsweise, ob ein dem Sitz zugeordneter Airbag aktiviert oder deaktiviert (beispielsweise bei Verwendung eines Kindersitzes) ist. Mit besonderem Vorteil kann in diesem Zusammenhang vorgesehen sein, dass die Insasseninformation zur Erkennung von für Deformationen bei der Kollision bereitstehende Freiräume der Fahrgastzelle des Kraftfahrzeugs verwendet wird. Ist beispielsweise bekannt, dass auf der Rückbank eines Kraftfahrzeugs keine Insassen befindlich sind, kann der entsprechende Bereich als verformbarer Raum freigegeben werden und entsprechend die Wahl des Kollisionspunktes beeinflussen. Selbstverständlich kann die Insasseninformation auch dahingehend berücksichtigt werden, hinsichtlich der Verformung möglichst große Abstände von den Insassen einzuhalten und dergleichen.

Es ist ferner besonders vorteilhaft, wenn bei der Ermittlung des geänderten Kollisionspunktes auch, insbesondere zusätzlich zur Insasseninformation, eine Beschleunigungskräfte, die maximal auf die Insassen wirken sollten, beschreibende Vitalinformation verwendet wird. Insassen von Kraftfahrzeugen können üblicherweise nur bestimmten Längs- und/oder Querbeschleunigungen bzw. Impulsen ausgesetzt werden, ohne ihre Gesundheit zu gefährden. Daher kann es gerade im Hinblick auf Kollisionen höherer Relativgeschwindigkeit zweckmäßig ein, auch ein "Personenschadensbild" mit in die Ermittlung des geänderten Kollisionspunktes einfließen zu lassen. Hierfür kann, beispielsweise im Rahmen einer Optimierung, eine Randbedingungen oder ein weiteres Optimierungskriterium verwendet werden. Eine Randbedingungen kann beispielsweise verlangen, dass in Bereichen, an denen sich Insassen befinden können bzw. aufgrund der Insasseninformationen tatsächlich befinden, bestimmte Längs- und/oder Drehbeschleunigungswerte nicht überschritten werden sollen. Innerhalb eines Steuergeräts, dass das erfindungsgemäße Verfahren durchführt, können beispielsweise Standard-Grenzwerte für Menschen abgelegt werden. Denkbar ist es aber auch, Zusatzdaten zu nutzen, um individuelle Grenzwerte zu ermitteln, beispielsweise abhängig von einem Alter, sei es für Insassen des eigenen Kraftfahrzeugs oder des Kollisionsobjekts, wobei dann die Zusatzdaten beispielsweise Teil der Kommunikationsinformation sein können, wie oben beschrieben.

Die Berücksichtigung möglicher menschlicher Schäden durch exzessive Beschleunigungen lässt sich in die hier beschriebene Vorgehensweise leicht integrieren, da ohnehin mechanische Vorgänge betrachtet und berechnet/simuliert werden.

Eine andere zweckmäßige Weiterbildung der vorliegenden Erfindung sieht vor, dass, insbesondere bei vorliegender Strukturinformation des durch ein weiteres Fahrzeug gebildeten, mit Insassen besetzten Kraftfahrzeugs, zusätzlich eine Maximierung der Deformationsenergie für den Kollisionspartner (das Kollisionsobjekt) erfolgt. Mit anderen Worten kann die Optimierung auch auf eine beidseitige Erhöhung der Sicherheit abzielen, so dass nicht nur eine erhöhte Sicherheit in dem Kraftfahrzeug, sondern auch im Kollisionspartner erreicht wird, wobei eine derartige Vorgehensweise bevorzugt gekoppelt mit der bereits angesprochenen gegenseitigen Abstimmung über Kraftfahrzeug-zu-Kraftfahrzeug-Kommunikation erfolgt.

Die vorliegende Erfindung kann besonders zweckmäßig eingesetzt werden, wenn das Kraftfahrzeug vollständig automatisch durch ein Fahrzeugsystem geführt wird. In diesem Fall lenkt der Fahrer nicht selbst bzw. bremst/beschleunigt, so dass sich der geänderte Kollisionspunkt besonders einfach umsetzen lässt. Jedoch auch bei teilweise automatisch und/oder vollständig durch den Fahrer geführten Kraftfahrzeugen besteht die Möglichkeit, die entsprechenden Verbesserungen zu erzielen, da dann beispielsweise vorbereitend auf die Kollision auch die manuelle Steuerung durch den Fahrer äußerst kurzzeitig blockiert werden kann, um die Kollision am geänderten Kollisionspunkt herbeizuführen.

Zweckmäßig kann jedoch in jedem Fall ein zur wenigstens teilweise automatischen Führung des Kraftfahrzeugs ausgebildetes Fahrzeugsystem genutzt werden, um die entsprechenden Aktoren gemäß der Fahreingriffsinformation anzusteuern.

Neben dem Verfahren betrifft die vorliegende Erfindung auch ein Kraftfahrzeug, aufweisend eine Umfeldsensoreinrichtung und ein zur Durchführung des erfindungsgemäßen Verfahrens ausgebildetes Steuergerät. Sämtliche Ausführungen bezüglich des erfindungsgemäßen Verfahrens lassen sich analog auf das erfindungsgemäße Kraftfahrzeug übertragen, mit welchem mithin ebenso die bereits genannten Vorteile erhalten werden können. Insbesondere kann das Kraftfahrzeug auch eine Kommunikationseinrichtung zur Kraftfahrzeug-zu-Kraftfahrzeug-Kommunikation und/oder zur Kommunikation mit einer Datenbank mit Strukturinformationen aufweisen. Ferner kann das Kraftfahrzeug ein Fahrzeugsystem zur wenigstens teilweise, insbesondere vollständig, automatischen Führung des Kraftfahrzeugs umfassen bzw. allgemein ein Fahrzeugsystem zur Durchführung von Fahreingriffen.

Das Kraftfahrzeug weist üblicherweise eine Karosserie und/oder weitere Elemente des Fahrzeugaufbaus auf, die in ihren kollisionsrelevanten Eigenschaften durch die Strukturinformation beschrieben werden können, wobei insbesondere unterschiedlichen, durch die Strukturinformation beschriebenen Elementen des Fahrzeugaufbaus die Kollisionsenergieaufnahmefähigkeit beschreibende Energiedaten zugeordnet sein können. Die Strukturinformation beschreibt zweckmäßigerweise auch die mechanischen Verbindungen zwischen einzelnen Elementen und/oder der Karosserie und/oder die relevanten mechanischen Eigenschaften, beispielsweise Steifigkeit und/oder Material und dergleichen.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: einen Ablaufplan eines Ausführungsbeispiels des erfindungsgemäßen Verfahrens,
- Fig. 2: eine Seitenansicht eines Kraftfahrzeugs mit Kollisionsenergie aufnehmenden Elementen,
- Fig. 3: eine Frontansicht des Kraftfahrzeugs der Fig. 2,
- Fig. 4: eine Skizze zur Erläuterung der Wahl eines Kollisionspunktes, und
- Fig. 5: eine Prinzipskizze eines erfindungsgemäßen Kraftfahrzeugs.

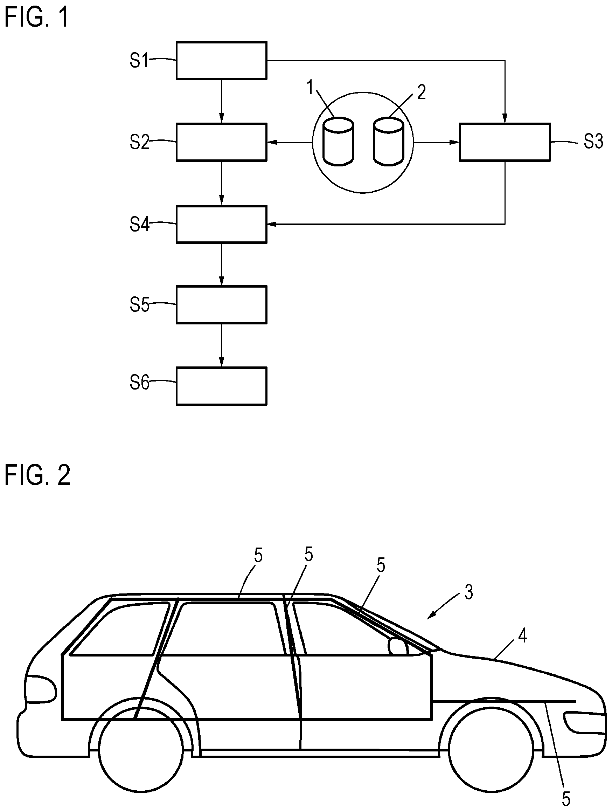

Fig. 1 zeigt einen Ablaufplan eines Ausführungsbeispiels des erfindungsgemäßen Verfahrens. Dabei wird im vorliegenden Fall von einer Kollisionssituation zwischen einem Kraftfahrzeug und einem weiteren Fahrzeug als Kollisionsobjekt ausgegangen. Die Kollision ist dabei in diesem Fall unvermeidbar.

Dabei wird in einem Schritt S1 die Unvermeidbarkeit der bevorstehenden Kollision festgestellt. Entsprechend werden in Schritten S2 und S3 vorbereitende Informationen ermittelt, konkret eine Kollisionsinformation im Schritt S2 und eine Strukturinformation betreffend das weitere Fahrzeug im Schritt S3. Sowohl im Schritt S2 als auch im Schritt S3 werden dabei sowohl Umfelddaten 1 einer Umfeldsensoreinrichtung des Kraftfahrzeugs als auch eine Kommunikationsinformation 2, die von dem weiteren Fahrzeug gesendet und mittels einer Kommunikationseinrichtung des Kraftfahrzeugs empfangen wurde, ausgewertet. Die Kollisionsinformation, die im Schritt S2 ermittelt wird, umfasst dabei beispielsweise eine Zeit bis zur Kollision (TTC), also Kollisionszeit, eine Kollisionsgeschwindigkeit und/oder einen Kollisionswinkel, wobei zusätzlich als ursprünglicher Kollisionspunkt eine Kollisionsposition ermittelt wird, an der das weitere Fahrzeug und das Kraftfahrzeug sich bei der Kollision zuerst berühren.

Nachdem zum eigenen Kraftfahrzeug bereits eine Strukturinformation vorliegt, wird im Schritt S3 eine entsprechende Strukturinformation auch für das weitere Fahrzeug bestimmt. Die Strukturinformationen für das eigene Kraftfahrzeug und das weitere Fahrzeug beschreiben dabei, ganz allgemein gesprochen, Kollisionseigenschaften des eigenen Kraftfahrzeugs bzw. des weiteren Fahrzeugs, insbesondere, welche Deformationen (Verformungen) auftreten und wieviel Deformationsenergie hierfür aufgenommen wird, mithin wie viel Kollisionsenergie für die entsprechenden Deformationen verbraucht wird. Dabei beschreibt die Strukturinformation vorliegend den strukturellen Aufbau der jeweiligen Fahrzeuge, also den sogenannten Fahrzeugaufbau an sich. Die Strukturinformation umfasst also beispielsweise Informationen zur Fahrzeugkarosserie, insbesondere zu speziellen Elementen derselben und/oder zu weiteren, das Kraftfahrzeug stabilisierenden Elementen wie beispielsweise Quer- und/oder Längsträgern. Ferner umfasst die Strukturinformation vorliegend auch relevante weitere Komponenten des Fahrzeugaufbaus, beispielsweise Informationen zum Motor, der ebenso Kollisionsenergie in Form von Deformationen aufnehmen kann. Wenigstens einem Teil der durch die Strukturinformation beschriebenen Elemente sind dabei Energiedaten zugeordnet, die beschreiben, wie die Elemente in der Lage sind, Kollisionsenergie aufzunehmen und in eine Deformation umzuwandeln. Selbstverständlich beschreibt die Strukturinformation auch, wie die darin enthaltenen Elemente mechanisch gekoppelt sind. Energiedaten können mechanische und/oder konstruktive Eigenschaften der jeweiligen Elemente beschreiben, beispielsweise deren Steifigkeit und/oder Material.

Dabei kann aus den Strukturinformationen insbesondere ein Modell, um die Kollision für einen bestimmten Kollisionspunkt durchzurechnen, herleitbar sein und/oder dieses Modell kann in der Strukturinformation bereits unmittelbar enthalten sein.

Um im Schritt S3 eine Strukturinformation auch für das weitere Fahrzeug zu ermitteln, sind im Wesentlichen zwei Wege denkbar, die auch in Kombination eingesetzt werden können. Zum einen ist es möglich, nachdem die Umfeldsensoreinrichtung vorliegend als Umfeldsensoren wenigstens eine Kamera und wenigstens einen Radarsensor enthält, optische Umfelddaten auszuwerten, um Rückschlüsse auf relevante Elemente des Fahrzeugaufbaus zu schließen, beispielsweise also Türen, Klappen, Scheiben, einen Kühlergrill, Kotflügel und dergleichen zu detektieren, auch was deren Form und relative Lage angeht. Bevorzugt ist es jedoch, aus der Kommunikationsinformation 2 oder aber auch aus den optischen Umfelddaten 1 einen Fahrzeugtyp zu bestimmen, konkret also eine Fahrzeugtypinformation, die den Fahrzeugtyp beschreibt, um diesen zu nutzen, die Strukturinformationen für das weitere Fahrzeug aus einer Datenbank abzurufen, die beispielsweise innerhalb des Kraftfahrzeugs vorliegen kann oder aber auch über eine Kommunikationsverbindung erreicht werden kann, beispielsweise auf einer Backend-Einrichtung im Internet.

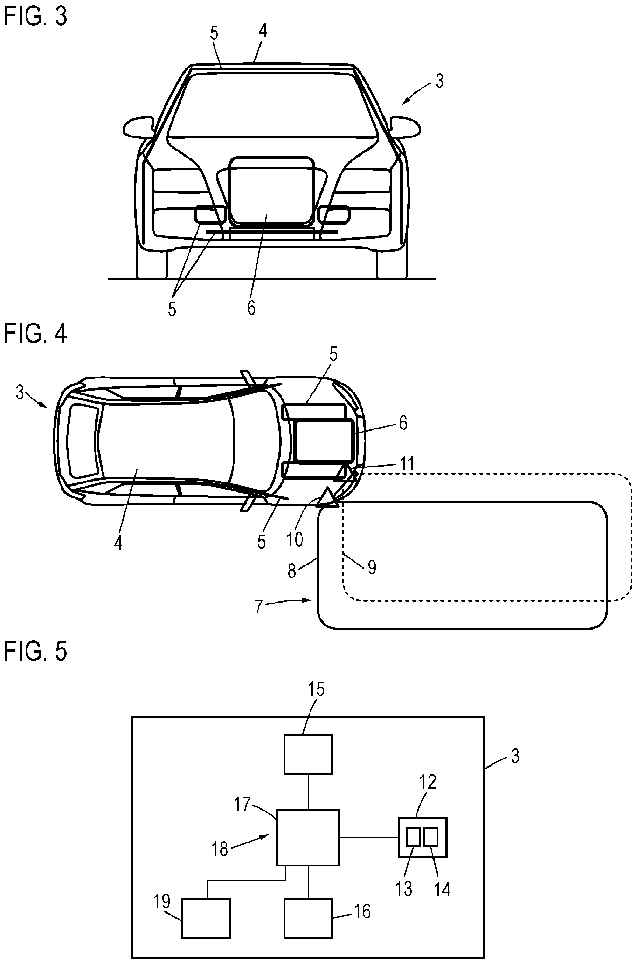

Fig. 2 zeigt beispielhaft eine schematische Seitenansicht eines Kraftfahrzeugs 1 mit einer Karosserie 4, wobei das Kraftfahrzeug eine Mehrzahl kollisionsrelevanter Elemente 5 aufweist, die durch die Strukturinformation beschrieben sein können. Die Elemente 5 können beispielsweise aus hochfestem Stahl und/oder festem Stahl bestehen und/oder Längs- und Querträger sein. Fig. 3 zeigt eine entsprechende Frontansicht, in der auch der Motor 6 als kollisionsrelevantes Element gezeigt ist.

In einem Schritt S4 werden die jeweiligen Strukturinformationen genutzt, um, ausgehend vom ursprünglichen Kollisionspunkt, im durch Fahreingriffe noch erreichbaren Raum einen verbesserten, geänderten Kollisionspunkt aufzufinden, für den die von der Fahrzeugstruktur aufgenommene Deformationsenergie maximiert ist. Das bedeutet, es wird in einem Optimierungsverfahren ein Kollisionspunkt gesucht, für den möglichst viel Kollisionsenergie in Deformationsenergie umgesetzt wird. Dabei wird vorliegend auch die Eindringtiefe des weiteren Fahrzeugs in das eigene Kraftfahrzeug 3 begrenzt bzw. sekundär, vorliegend mit einer geringeren Gewichtung, minimiert. Schließlich gehen in den Schritt S4 auch eine Insasseninformation und eine Vitalinformation ein, die aus einer Belegungserkennungseinrichtung, beispielsweise zur Erkennung von Sitzbelegungen, bereitgestellt wird. Auf diese Weise können zur Deformation bereitstehende, nicht durch Insassen besetzte weitere Freiräume zur Deformation festgestellt werden und die Optimierung kann hinsichtlich der Positionen der Insassen erfolgen. Ferner können aufgrund der Vitalinformation zu starke Beschleunigungen an den Positionen der Insassen vermieden werden.

Vorliegend können beispielsweise die in den Strukturinformationen enthaltenen bzw. aus diesen ableitbaren Modelle des Kraftfahrzeugs 3 und des weiteren Fahrzeugs genutzt werden, um zunächst durch Simulation und/oder analytische Berechnung Deformationswege zu bestimmen. Mithilfe des Energierasterverfahrens können aus diesen Deformationswegen entsprechende Deformationsenergien abgeleitet werden. Entsprechende Methodiken sind im Bereich der Unfallanalytik bereits vorgeschlagen worden und können auch im Rahmen der vorliegenden Erfindung eingesetzt werden.

Zusammenfassend wird also im Schritt S4 eine energetische Betrachtung durchgeführt, um die Deformationsenergie bei Beschränkung der Eindringtiefe des weiteren Fahrzeugs zu maximieren, mithin eine Auftreffposition so zu wählen, dass ein Großteil der Kollisionsenergie in Deformationsenergie übergeführt wird und die Insassen und das eigene Kraftfahrzeug 3 optimal geschützt werden. Dies sei anhand der Fig. 4 nochmals näher erläutert, die erneut das Kraftfahrzeug 3 und einige relevante Elemente 5, insbesondere auch den Motor 6, andeutet. Ferner sind zwei denkbare Positionen 8, 9 des weiteren Fahrzeugs 7 als Kollisionsobjekt mit den jeweiligen Kollisionspunkten 10, 11 einmal mit durchgezogener Linie und einmal gestrichelt angedeutet. Wird beispielsweise die Position 8 des weiteren Fahrzeugs 7 mit dem ursprünglichen Positionspunkt 10 angenommen, ist festzuhalten, dass der ursprüngliche Kollisionspunkt 10 nicht an einem Element 5 bzw. dem Motor 6 liegt, sondern lediglich auf Fahrwerksteilen, wodurch nur ein geringer Energieanteil der Kollisionsenergie absorbiert werden kann und eine höhere Eindringtiefe des weiteren Fahrzeugs 7 in die Fahrzeugstruktur des eigenen Kraftfahrzeugs 3 resultiert. Die gestrichelte Position 9 weist im Gegensatz dazu jedoch einen geänderten Kollisionspunkt 11 auf, der auf einem Strukturpunkt liegt, der viel Kollisionsenergie absorbieren kann. Auf diese Weise werden die schädigenden Einflüsse auf die Insassen reduziert.

Dabei werden vorteilhaft im Schritt S4 die Strukturinformationen sowohl des eigenen Kraftfahrzeugs 3 als auch des weiteren Fahrzeugs 7 berücksichtigt, so dass die Fahrzeugstruktur beider Fahrzeuge 3, 7, die in ihrem kollisionsrelevanten Anteil auch als Crashstruktur bezeichnet werden kann, optimal ausgenutzt werden kann.

In einem Schritt S5 der Fig. 1 werden entsprechend Fahreingriffsinformationen ermittelt, für die die hierdurch beschriebenen Fahreingriffe den im Schritt S4 bestimmten, optimalen geänderten Kollisionspunkt 11 herbeiführen. Mittels eines zur vollständig automatischen Führung des Kraftfahrzeugs 3 ausgebildeten Fahrzeugsystems werden die durch die Fahreingriffsinformation beschriebenen Fahreingriffe, insbesondere umfassend Quer- und/oder Längseingriffe, in einem Schritt S6 umgesetzt.

Dabei ist noch anzumerken, dass zweckmäßigerweise eine ständige Aktualisierung, insbesondere durch weitere Nachverfolgung des Kollisionsobjekts in den Umfelddaten 1, erfolgt, um auch auf Manöver des weiteren Fahrzeugs 7 reagieren zu können. Auch eine Abstimmung über die genannte Kraftfahrzeug-zu-Kraftfahrzeug-Kommunikation kann erfolgen. Insbesondere bei einer derartigen Abstimmung kann die Optimierung im Schritt S4 auch so erfolgen, dass sich für das weitere Fahrzeug 7 ebenso ein optimaler, geänderter Kollisionspunkt 11 ergibt.

Das hier beschriebene Verfahren wird idealerweise eingesetzt, wenn das eigene Kraftfahrzeug 3 teilweise oder vollständig automatisch betrieben wird, wobei auch ein Einsatz bei manuellem Betrieb möglich ist, wobei dann die manuellen Steuerungsmöglichkeiten kurzzeitig vor der Kollision blockiert werden können.

Fig. 5 zeigt schließlich eine funktionale Prinzipskizze eines erfindungsgemäßen Kraftfahrzeugs 3. Dieses weist, wie bereits erwähnt, zunächst die Umfeldsensoreinrichtung 12 auf, die vorliegend wenigstens einen Radarsensor 13 und wenigstens eine Kamera 14 als Umgebungssensoren aufweist. Die Umfelddaten der Umfeldsensoreinrichtung 12 werden genau wie die Kommunikationsinformation einer Kommunikationseinrichtung 15 und eine Insasseninformation einer Belegungserkennungseinrichtung 16 einem Steuergerät 17 eines Sicherheitssystems 18 bereitgestellt, das zur Durchführung des erfindungsgemäßen Verfahrens ausgebildet ist. In dem Steuergerät 17 kann auch die Strukturinformation des eigenen Kraftfahrzeugs 3 abgelegt sein. Eine Datenbank mit Strukturinformationen verschiedener Fahrzeugtypen ist bevorzugt über das Internet mittels einer entsprechenden Schnittstelle der Kommunikationseinrichtung 15 ansprechbar.

Zur Umsetzung der Fahreingriffsinformation kann das Steuergerät 17 ein vorliegend zur vollständig automatischen Fahrzeugführung des Kraftfahrzeugs 3 ausgebildetes Fahrzeugsystem 19 ansteuern.

## Patentansprüche

1. Verfahren zum Betrieb eines Kraftfahrzeugs (3) bei einer unvermeidbaren Kollision mit einem Kollisionsobjekt, insbesondere einem weiteren Fahrzeug (7), wobei mittels einer wenigstens einen Umfeldsensor umfassenden Umfeldsensoreinrichtung (12) das Kollisionsobjekt betreffende Umfelddaten (1) ermittelt werden und zur Ermittlung wenigstens einer Fahreingriffsinformation zur Kollisionsfolgenminderung ausgewertet werden, wobei das Kraftfahrzeug (3) gemäß der Fahreingriffsinformation automatisch geführt wird, wobei die Auswertung der Umfelddaten (1) gemeinsam mit einer den Fahrzeugaufbau, insbesondere umfassend Kollisionsenergie aufnehmende Elemente (5), des Kraftfahrzeugs (3) beschreibenden Strukturinformation des eigenen Kraftfahrzeugs (3) derart erfolgt, dass bei der Ermittlung der Fahreingriffsinformation ein die von der Fahrzeugstruktur aufgenommene Deformationsenergie maximierender, durch die Fahreingriffsinformation herzustellender, geänderter Kollisionspunkt (11) ermittelt wird,
**dadurch gekennzeichnet,**
**dass** die Ermittlung der Deformationsenergie aus einem Verformungsweg in einem Energierasterverfahren erfolgt und dass neben einer Maximierung der Deformationsenergie auch eine Minimierung der Eindringtiefe und/oder eine maximal zulässige Eindringtiefe bei der Ermittlung des geänderten Kollisionspunktes (11) angestrebt wird.

2. Verfahren nach Anspruch 1,
**dadurch gekennzeichnet,**
**dass** wenigstens eine wenigstens eine Eigenschaft des Kollisionsobjekts beschreibende Kommunikationsinformation (2) über eine zur Kraftfahrzeug-zu-Kraftfahrzeug-Kommunikation ausgebildete Kommunikationseinrichtung (15), insbesondere gesendet von dem Kollisionsobjekt, empfangen und bei der Ermittlung des geänderten Kollisionspunktes (11) berücksichtigt wird.

3. Verfahren nach Anspruch 1 oder 2,
**dadurch gekennzeichnet,**
**dass** aus den Umfelddaten (1) und/oder der Kommunikationsinformation (2) eine Strukturinformation des Kollisionsobjekts ermittelt wird und die Ermittlung des geänderten Kollisionspunktes (11) unter Berücksichtigung der Strukturinformationen sowohl des eigenen Kraftfahrzeugs (3) als auch des Kollisionsobjekts erfolgt.

4. Verfahren nach Anspruch 3,
**dadurch gekennzeichnet,**
**dass** aus den Umfelddaten (1) und/oder der Kommunikationsinformation (2) ein Fahrzeugtyp des Kollisionsobjekts ermittelt wird, wobei die Strukturinformation unter Verwendung des Fahrzeugtyps aus einer Datenbank abgerufen wird.

5. Verfahren nach einem der vorangehenden Ansprüche,
**dadurch gekennzeichnet,**
**dass** bei der Ermittlung des geänderten Kollisionspunktes (11) auch eine die Position von Insassen innerhalb des Kraftfahrzeugs (3) beschreibende Insasseninformation, insbesondere ermittelt durch eine Belegungserkennungseinrichtung (16), und/oder eine Beschleunigungskräfte, die maximal auf die Insassen wirken sollten, beschreibende Vitalinformation verwendet wird.

6. Verfahren nach Anspruch 5,
**dadurch gekennzeichnet,**
**dass** die Insasseninformation zur Erkennung von für Deformationen bei der Kollision bereitstehenden Freiräumen der Fahrgastzelle des Kraftfahrzeugs (3) verwendet wird.

7. Verfahren nach einem der vorangehenden Ansprüche,
**dadurch gekennzeichnet,**
**dass** das Kraftfahrzeug (3) vollständig automatisch durch ein Fahrzeugsystem (19) geführt wird.

8. Kraftfahrzeug (3), aufweisend eine Umfeldsensoreinrichtung (12) und ein zur Durchführung eines Verfahrens nach einem der vorangehenden Ansprüche ausgebildetes Steuergerät (17).

## Claims

1. Method for operating a motor vehicle (3) in the event of an unavoidable collision with a collision object, in particular another vehicle (7), wherein environment data (1) relating to the collision object are determined by means of an environment sensor device (12) comprising at least one environment sensor and are evaluated to determine at least one item of driving intervention information for reducing the consequences of a collision, wherein the motor vehicle (3) is automatically guided in accordance with the driving intervention information, wherein the evaluation of the environment data (1) is carried out together with an item of structural information of the vehicle (3) itself describing the vehicle body, in particular comprising collision energy absorbing elements (5), of the motor vehicle (3) in such a way that in the determination of the item of driving intervention information a modified collision point (11) that maximises the deformation energy absorbed by the vehicle construction and is to be produced by the item of driving intervention information is determined,
**characterised in that**
the determination of the deformation energy is carried out from a deformation path in an energy grid method and **in that**, in addition to a maximisation of the deformation energy, a minimisation of the penetration depth and/or a maximum permissible penetration depth is also sought in the determination of the modified collision point (11).

2. Method according to claim 1,
**characterised in that**
at least one item of communication information (2) describing at least one property of the collision object is received via a communication device (15) configured for motor vehicle-to-motor vehicle communication, in particular transmitted by the collision object, and is taken into account in the determination of the modified collision point (11).

3. Method according to claim 1 or 2,
**characterised in that**
an item of structural information of the collision object is determined from the environment data (1) and/or the item of communication information (2) and the determination of the modified collision point (11) is carried out taking into account the item of structural information of both the motor vehicle (3) itself and the collision object.

4. Method according to claim 3,
**characterised in that**
a vehicle type of the collision object is determined from the environment data (1) and/or the item of communication information (2), wherein the item of structural information is retrieved from a database using the vehicle type.

5. Method according to any one of the preceding claims,
**characterised in that**
in the determination of the modified collision point (11), an item of occupant information describing the position of occupants within the motor vehicle (3), in particular determined by an occupancy detection device (16), and/or an item of vital information describing maximal acceleration forces that are to act on the occupants is also used.

6. Method according to claim 5,
**characterised in that**
the item of occupant information is used to detect spaces of the passenger compartment of the motor vehicle (3) available for deformations during the collision.

7. Method according to any one of the preceding claims,
**characterised in that**
the motor vehicle (3) is guided fully automatically by a vehicle system (19).

8. Motor vehicle (3), comprising an environment sensor device (12) and a control device (17) configured for carrying out a method according to any one of the preceding claims.

## Revendications

1. Procédé de fonctionnement d'un véhicule automobile (3) lors d'une collision inévitable avec un objet de collision, en particulier un autre véhicule (7), dans lequel au moyen d'un appareil de capteur d'environnement (12) comprenant au moins un capteur d'environnement, les données d'environnement (1) concernant l'objet de collision sont déterminées et sont évaluées pour la détermination au moins d'une information d'intervention de conduite pour atténuer les conséquences de la collision, dans lequel le véhicule automobile (3) est guidé automatiquement selon l'information d'intervention de conduite, dans lequel l'évaluation des données d'environnement (1) est effectuée conjointement avec une information de structure décrivant la carrosserie de véhicule, en particulier comprenant des éléments (5) recevant de l'énergie de collision, du véhicule automobile (3) du propre véhicule automobile (3) de telle manière que lors de la détermination de l'information d'intervention de conduite, un point de collision (11) modifié, à établir par l'information d'intervention de conduite, augmentant l'énergie de déformation reçue par la structure de véhicule soit déterminé,
**caractérisé en ce que**
la détermination de l'énergie de déformation est effectuée à partir d'une course de déformation dans un procédé de tramage d'énergie et qu'à côté d'une maximisation de l'énergie de déformation, une minimisation de la profondeur de pénétration et/ou une profondeur de pénétration autorisée au maximum est aussi recherchée lors de la détermination du point de collision (11) modifié.

2. Procédé selon la revendication 1,
**caractérisé en ce que**
au moins une information de communication (2) décrivant au moins une propriété de l'objet de collision est reçue par le biais d'un appareil de communication (15) réalisé pour la communication de véhicule automobile à véhicule automobile, en particulier envoyée par l'objet de collision et est prise en considération lors de la détermination du point de collision (11) modifié.

3. Procédé selon la revendication 1 ou 2,
**caractérisé en ce que**
une information de structure de l'objet de collision est déterminée à partir des données d'environnement (1) et/ou de l'information de communication (2) et la détermination du point de collision (11) modifié est effectuée en tenant compte des informations de structure non seulement du propre véhicule automobile (3) mais aussi de l'objet de collision.

4. Procédé selon la revendication 3,
**caractérisé en ce que**
un type de véhicule de l'objet de collision est déterminé à partir des données d'environnement (1) et/ou de l'information de communication (2), dans lequel l'information de structure est consultée en utilisant le type de véhicule à partir d'une base de données.

5. Procédé selon l'une quelconque des revendications précédentes,
**caractérisé en ce que**
lors de la détermination du point de collision (11) modifié, une information de passager décrivant la position de passagers dans le véhicule automobile (3) est aussi utilisée, en particulier déterminée par un appareil de reconnaissance d'occupation (16), et/ou une information vitale décrivant des forces d'accélération qui devraient agir au maximum sur les passagers.

6. Procédé selon la revendication 5,
**caractérisé en ce que**
l'information de passager est utilisée pour la reconnaissance d'espaces libres disponibles pour des déformations lors de la collision de l'habitacle du véhicule automobile (3).

7. Procédé selon l'une quelconque des revendications précédentes,
**caractérisé en ce que**
le véhicule automobile (3) est complètement guidé automatiquement par un système de véhicule (19).

8. Véhicule automobile (3), présentant un appareil de capteur d'environnement (12) et un dispositif de commande (17) réalisé pour la réalisation d'un procédé selon l'une quelconque des revendications précédentes.
